# EUROPEAN PATENT APPLICATION

(11) **EP 3 629 191 A1**
(43) Date of publication of application: **01.04.2020**
(21) Application number: 18306281.9
(22) Date of filing: 28.09.2018
(51) Int. Cl.: G06F 16/00

(54) **USING HASH COMPUTED FROM KEY TO IDENTITY DATABASE LOCATION AT WHICH TO STORE DATA CORRESPONDING TO KEY**

(71) Applicant: Hewlett Packard Enterprise Development LP, Houston, TX 77070 (US)
(72) Inventor: DRAPERI, François, 38053 GRENOBLE (FR); PELLAN, Hervé, 38053 GRENOBLE (FR); BELIN, Nicolas, 38053 GRENOBLE (FR)
(74) Representative: Haseltine Lake Kempner LLP

(57) **Abstract**

A storage system (100) local to a computing device (405) stores a database of data entities, such as binary large objects (BLOBs), at locations within the database. The computing device computes hashes from keys (206, 306), such as distinguished names (DNs), having corresponding data stored in the data entities of the database. The hashes identify the locations within the database at which the data entities storing the data corresponding to the DNs are stored within the database (208, 308).

## Description

### BACKGROUND

Databases can be used to store large amounts of data. In many usage scenarios, data is read more often than is written, such that databases are optimized to optimize read access time over write access time. However, in some usage scenarios, data may be written more often than may be read. Examples of such usage scenarios include telecommunication infrastructures, including cellular phone and mobile data telecommunication infrastructures, which employ lightweight directory access protocol (LDAP) document information trees (DITs) to store data.

### BRIEF DESCRIPTION OF THE DRAWINGS

FIG. 1 is a diagram of an example storage system having storage devices over which a database is stored.
FIG. 2 is a flowchart of an example method for writing to a database.
FIG. 3 is a flowchart of an example method for reading from a database.
FIG. 4 is a diagram of an example multiple-site system in which a database replica is stored at each site.

### DETAILED DESCRIPTION

As noted in the background, some usage scenarios optimize database write access over database read access, such that reducing write access time is a paramount concern over reducing read access time. In usage scenarios like telecommunication infrastructures, a number of local sites may each store a replica of a database within a storage system having multiple storage devices. To ensure optimal write performance, data writes to the database replica at each local site should be balanced across the storage devices of the storage system storing the replica.

Data written to a database may be identified by a distinguished name (DN), which is a unique string that identifies an entry within a database like a lightweight directory access protocol (LDAP) database such as an LDAP document information tree (DIT). However, DNs are not random. This means if the DNs are used as a way to determine locations within the database at which to store binary large objects (BLOBs) of data corresponding to the DNs, some storage devices of the storage system may receive more write activity than other storage devices. Write performance over the storage system as a whole is thus impaired, because write activity is concentrated at few or even one storage device instead of being balanced over all the storage devices.

One approach to ameliorating this issue is to generate a random number for a DN, and storing data corresponding to a DN in a BLOB at a location within the database identified by the random number. Such randomness innately ensures that write activity occurs over the storage devices of a storage system in a balanced manner. However, this approach introduces race conditions that have to be resolved, in which two sites may be attempting to write data corresponding to the same DN at the same time, and thus may generate different random numbers for the location within the database at which to store a BLOB including the data. This means that the ordering of the data within the database is not maintained over the replicas of the database local to the sites, affecting the ability to migrate and synchronize the replicas, as well as causing other data consistency issues.

Furthermore, another database mapping the DNs to the random numbers identifying the locations within the database storing BLOBs of data corresponding to the DNs has to be maintained in this approach. While the database storing the BLOBs of data corresponding to the DNs is innately balanced when using random numbers to identify the locations within the database at which the BLOBs are stored, the DN-to-random number database is not. This is because the DNs themselves are not random, as noted above. Therefore, the mapping database has to be periodically rebalanced in this approach.

Techniques described herein lessen these and other issues. Rather than generate a random number for a DN to identify the location within the database at which to store a BLOB of data corresponding to the DN, a hash is instead computed from the DN using a hash algorithm that can guarantee randomness by more than a threshold. Race conditions are avoided insofar as each local site uses the same hash algorithm, and thus will generate the same hash and identify the same database location for a given DN. Furthermore, data ordering is maintained over the replicas of the database local to the sites, so that database migration and replica synchronization can be achieved. No secondary mapping database has to be maintained.

One example more specifically identifies the location within the database at which to store a BLOB of data corresponding to a DN by the hash generated from the DN and a collision identifier. The hash algorithm may guarantee that the possibility that any two DNs resolve to the same hash be less than one in ten to the power of N for a very large number of N. However, because no existing hash algorithm can guarantee an infinite such N, there remains the possibility that two DNs resolve to the same hash, which can corrupt data corresponding to these DNs. The usage of a collision identifier as described herein ensures that the BLOB for the data corresponding to each DN is stored at a different location within the database. The collision identifiers may be local to each site and not be shared among the sites storing the database replicas.

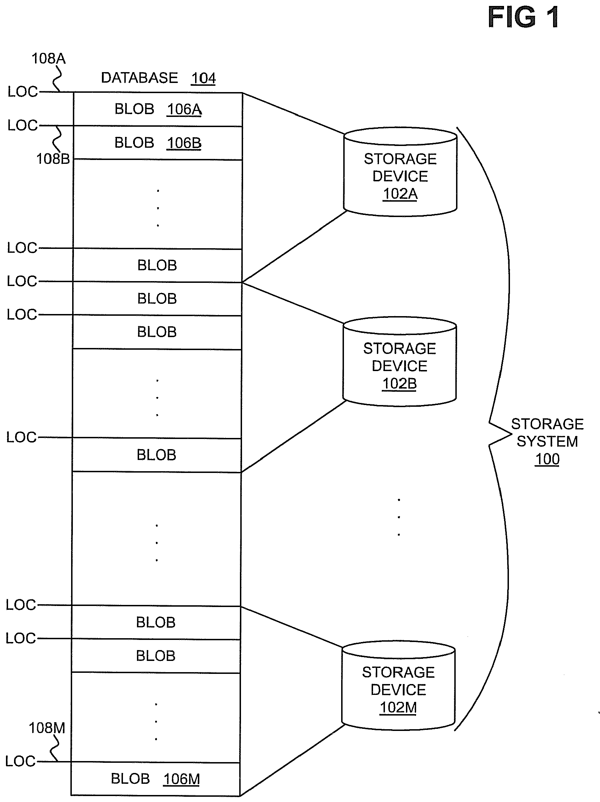

FIG. 1 shows an example storage system 100. The storage system 100 may be located at a specific site of a number of geographically dispersed sites, or locations. The storage system 100 includes multiple storage devices 102A, 102B, ..., 102M, which are collectively referred to as the storage devices 102. The storage devices 102 may be hard disk drives, solid-state drives (SSDs), or other types of non-volatile storage devices. The storage devices 102 may be organized within an array, or in another manner.

A database 104 is stored over the storage devices 102 of the storage system 100. The database 104 may be a DIT, such as an LDAP DIT. When the storage system 100 is located at a particular site of a number of geographically dispersed sites, the database 104 may be a replica of the same database of which replicas are stored at the other sites, and which are at least periodically synchronized with one another so that each site maintains the same data.

The database 104 stores data within BLOBs 106A, 106B, ..., 106M, which are collectively referred to as the BLOBs 106, at corresponding locations 108A, 108B, ..., 108M within the database and that are collectively referred to as the locations 108. A BLOB 106 can be defined as a contiguous collection of binary data stored as a single entity within the database 104. Each location 108 within the database 104 can map to a particular storage device 102, such that each BLOB 106 is stored on a specific storage device 102 of the storage system 100. The locations 108 of the database 104 may be contiguously mapped to the storage devices 102, as depicted in FIG. 1, or may be mapped to the storage devices 102 in a different manner.

The number of BLOBs 106 and thus the number of locations 108 are much larger than the number of storage devices 102. For instance, each storage device 102 may store millions, trillions, or more BLOBs 106. By comparison, the number of storage devices 102 may be on the order of magnitude of three or less. While examples are described herein in relation to BLOBs, other types of data entities can also be employed. Other example structures include raw database entries, LDAP entities, and so on.

To ensure balanced write access to the database 104 over the storage devices 102, data should be written to BLOBs 106 at locations 108 mapping uniformly across the storage devices 102. In an example implementation, the data may be written within any period of time... If, in a given period of time, data is written to multiple BLOBs 106 at locations 108 mapped just to the storage device 102A, for example, then write access suffers, because the storage device 102A is burdened with the write activity while the other storage devices 102 may remain relatively unused in this respect. Each BLOB 106 stores data associated with a DN, such as an LDAP DN. Because DNs are not random, mapping the locations 108 within the database 104 to the DNs to determine where to store the BLOBs 106 of data for the DNs does not guarantee random distribution of the BLOBs 106 over the storage devices 102, such that write access to the database 104 will not be balanced over the storage devices 102.

Generally, therefore, the DNs are hashed using a hash algorithm, and the resulting hashes used to identify the locations 108 within the database 104 at which to store the BLOBs 106 of the data for the DNs. That is, when data for a DN is to be written to the database 104, the DN is input into a hash algorithm. The resulting hash that the hash algorithm outputs is then used to identify the location 108 at which the store the BLOB 106 of the data for this DN. While examples are described herein in relation to a DN, other types of keys may also be employed. Other example keys include strings, binary keys, a key composed of multiple parts, and so on.

The hash algorithm is selected so that even for repeating patterns within the DNs, the hashes output by the algorithm for the DNs are distributed over a range of possible hash values in a balanced manner. Examples of such hash algorithms include MD5, RIPEMD-160, SHA, and so on. The locations 108 can be linearly mapped to the output hashes, or identified from the hashes in another way.

As noted above, while the hash algorithm may guarantee that the likelihood that two DNs will result in the same hash is probabilistically zero in effect, no existing hash technique can absolutely guarantee that no two DNs will result in the same hash. Therefore, a collision identifier can be used to further ensure that the BLOBs 106 of data for two DNs are not stored at the same location 108 within the database 104, to prevent data corruption. This is described in detail later in the detailed description.

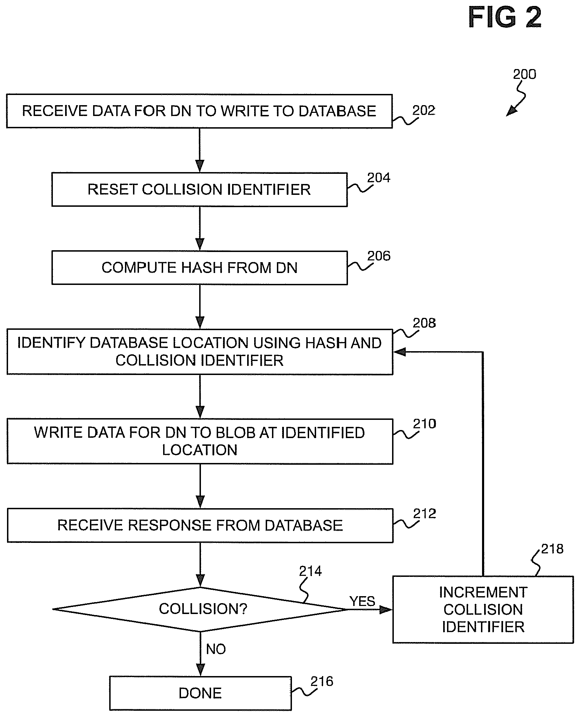

FIG. 2 shows an example method 200 for writing data for a DN to the database 104. The method 200 can be performed by a computing device to which the storage system 100 is local, such as at the same site at which the system 100 is located. The method 200 can be implemented as program code stored on a non-transitory computer-readable data storage medium, and executed by a processor.

Data for a DN that is to be stored in the database 104 is received (202). The DN uniquely identifies an entry in the database 104. In the case of an LDAP database, the DN is analogous to an absolute path in a file system that specifies both the name of a file and the hierarchical location of the file within the file system. The received data for the DN is the data to be stored in the entry in the database 104.

A collision identifier is reset (204). The collision identifier may be an integer counter, and reset to a value of zero. A hash is computed from the DN, using a hash algorithm (206), and a location 108 within the database 104 at which to store a BLOB 106 of the data for the DN identified from the computed hash and the collision identifier (208). When the collision identifier is first reset, therefore, the database location 108 is effectively identified using just the computed hash, since the collision identifier has not yet been incremented or otherwise adjusted.

A data write attempt to the BLOB 106 is made at the identified location 108 (210). The data written to the BLOB 106 includes the DN itself, so that later retrieval of the BLOB 106 permits inspection as to which DN the data stored in the BLOB 106 pertains. The write may be successful or unsuccessful. The write is unsuccessful if there is already a BLOB 106 at the location 108 in question, but the data within the BLOB 106 is for a different DN. This corresponds to the situation where two DNs - the DN for which data was received in part 202 and another DN - resolve to the same hash, and data for the latter DN was already written to a BLOB 106 at the location 108. The write is successful if there was not a BLOB 106 at the database location 108 storing data for a different DN.

A response is thus received from the database 104 (212), indicating whether or not the write was successful. An unsuccessful write means that there is a collision, in that the database location 108 identified in part 208 to which to store a BLOB 106 for the DN already stores a BLOB 106 for a different DN. A successful write means that there is no such collision. If there is no collision (214), then the method 200 concludes (216) with the successful write.

However, if there is a collision (214), then the collision identifier is incremented (218) - more generally, the collision identifier is adjusted - and the method 200 is repeated at part 208, where a new database location 108 is identified using the previously computed hash and the now-incremented/adjusted collision identifier. The new location 108 that is identified is the next location in the database 104 stored in the storage system 100 that is local to the computing device performing the method 200, as a result of the collision identifier having been incremented or otherwise adjusted. The data for the DN is (attempted to be) written to a BLOB 106 at the identified new location (210).

As before, a response is received from the database 104 (212). If the response indicates that no collision occurred (214), then the method 200 successfully ends (216). Otherwise, the response indicates that a collision has (again) occurred (214), and the process beginning at part 218 is repeated, until ultimately the writing of data for the DN is successful and the method 200 finishes at part 216 with a successful write.

More generally, the iterative process described in relation to parts 208, 210, 212, 214, and 218 identifies a free location within the database 104 at which to store a BLOB 106 of data corresponding to the DN, so that the BLOB 106 is not written to a location within the database 104 at which a BLOB of data for another DN that resolves to the same hash is stored. For instance, there may be three DNs that resolve to the same hash, such that data for the DNs are stored in corresponding BLOBs at example locations A0, A1, and A2. The BLOB at location A1 may be subsequently deleted. When writing data for a fourth DN that also resolves to the same hash, the existing BLOBs at locations A0 and A2 are read, then the newly vacant location A1 may be selected.

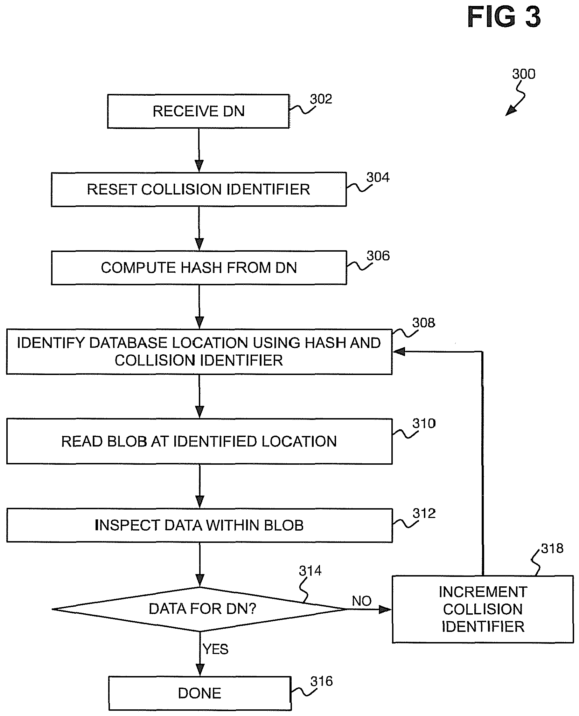

FIG. 3 shows an example method 300 for reading data for a DN from the database 104. Like the method 200, the method 300 can be performed by a computing device to which the storage system 100 is local, such as at the same site at which the system 100 is located. The method 300 can similarly be implemented as program code stored on a non-transitory computer-readable data storage medium, and executed by a processor.

The DN for which data is to be retrieved from the database 104 is received (302), and a collision identifier reset (304). A hash is computed from the DN, using a hash algorithm (306), and a location 108 within the database 104 from which to retrieve a BLOB 106 of data identified from the computed hash and the collision identifier (308). As before, when the collision identifier is first reset, the database location 108 is effectively identified using just the computed hash, since the collision identifier has not yet been incremented or otherwise adjusted.

The BLOB 106 of data at the identified location 108 within the database 104 is retrieved (310), and inspected to determine whether the data is for the DN received in part 302 (312). As noted above, when a BLOB 106 is stored within the database 104, the data in question includes the DN. The data within the BLOB 106 at the identified location 108 within the database 104 will not pertain to the DN received in part 302 if, when the data for this DN was previously written to the database 104, there was a collision. As such, the data for the DN in question was instead written to a BLOB 106 at a different location 108 within the database 104 due to the collision identifier having been incremented or otherwise adjusted one or more times.

Therefore, if the data within the retrieved BLOB 106 is not for the DN in question (314), then the collision identifier is incremented (318) or otherwise adjusted. A new database location 108 is identified using the previously computed hash and the now-incremented/adjusted collision identifier. The new location 108 that is identified is the next location in the database 104 stored in the storage system 100 that is local to the computing device performing the method 300, as a result of the collision identifier having been incremented or otherwise adjusted. The BLOB 106 at this new location is read (310).

As before, the data within the (newly read) BLOB 106 is inspected to determine whether the data is for the DN received in part 302 (312). If the data within this BLOB 106 is for the DN (314), then the method 300 successfully concludes (316). Otherwise, if the data within the BLOB 106 still does not pertain to the DN in question (314), then the process beginning at part 318 is repeated, until ultimately data for the DN is read from a BLOB 106 within the database 104 and the method 300 finishes at part 316.

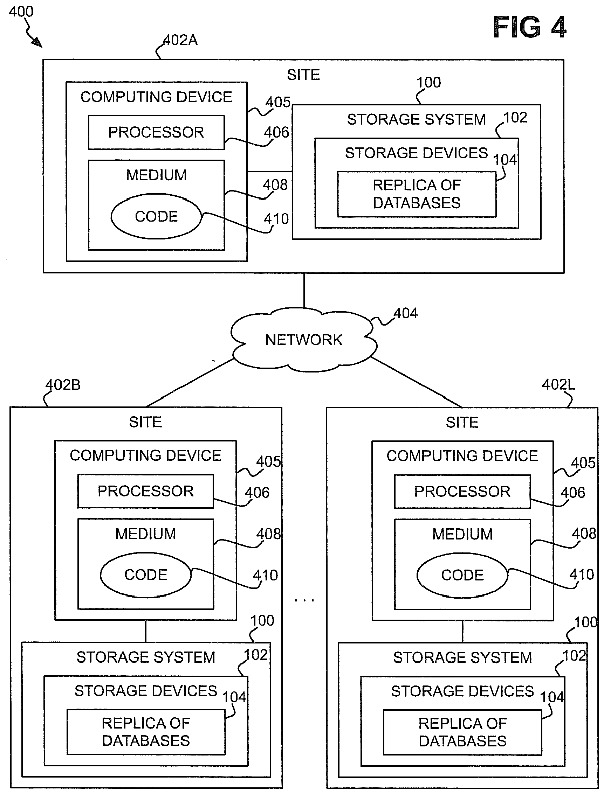

FIG. 4 shows an example multiple-site system 400. The system 400 includes sites 402A, 402B, ..., 402L, collectively referred to as the sites 402, and which can be geographically separate from one another or otherwise at different locations. The sites 402 are interconnected with one another over a network 404, such as a wide-area network (WAN), the Internet, or another type of network.

Each site 402 includes the storage system 100 that has been described, including storage devices 102 on which a replica of the database 104 is distributively stored in a balanced manner as has been described. Each site 402 also includes a computing device 405, such as a server computing device, communicatively connected to the storage system 100. Each computing device 405 includes a processor 406 and a non-transitory computer-readable data storage medium 408 storing program code 410 that the processor 406 executes to perform the methods 200 and 300 that have been described.

Therefore, the computing device 405 at each site 402 locally computes the same hash value from a given DN, because each computing device 405 uses the same hash algorithm. As such, no mapping database common to the sites 402 has to be maintained to identify the locations 108 at which the BLOBs 106 of the data corresponding to the DNs commonly across the sites 402. Similarly, since the same hash algorithm is used at each site 402, ordering of the database 104 is maintained across the replicas at the different sites 402.

However, the collision identifiers described in reference to FIGs. 2 and 3 are individually local to the sites 402, and do not have to be shared among the sites 402. For example, when a computing device 405 increments or otherwise adjusts a collision identifier when writing data for a DN according to the method 200 or when reading data for the DN according to the method 300, the computing device 405 does not have to share the collision identifier with the computing device 405 at any other site 402. The computing device 405 may indeed not even locally maintain (i.e., persist or store) the collision identifiers that it used, in conjunction with the hashes, to identify the database locations 108 at which BLOBs 106 of data for DNs are stored.

Rather, when the computing device 405 at a given site 402 encounters a collision when writing a BLOB 106 of data for a DN, the computing device 405 at that time increments or otherwise adjusts a collision identifier and attempts to write the BLOB 106 to the next location within its corresponding replica of the database 104, as described above. The computing device 405 can discard the collision identifier once writing is successful. If the computing device 405 later is to perform a write for another DN that resolves to the same hash, the device 405 will just again increment or otherwise adjust the collision identifier until no collision occurs, such that prior knowledge of the collision identifier is unnecessary. Similarly, when performing a read for a given DN, the computing device 405 will keep incrementing or otherwise adjusting the collision identifier until the device 405 reads a BLOB 106 of data that pertains to the DN in question, again such that prior knowledge of the collision identifier is unnecessary.

When a computing device 405 at one site 402 encounters a collision while writing a BLOB 106 for a DN that resolves to a particular hash, the computing device 405 at another site 402 may at the same time encounter a collision while writing a BLOB 106 of data for a different DN that resolves to the same hash. The two computing devices 405 may thus store the BLOBs 106 of data for their respective DNs in the same relative location in their replicas of the database 104. This potential, albeit unlikely, scenario does not affect data consistency across the replicas of the database 104 however, since the collision identifiers are individually local to the sites 402 and not shared among the sites 402.

For instance, the ordering of the data within the replicas of the database 104 can be maintained using the DNs, without having to share the collision identifiers that any particular site 402 has used. When synchronization occurs, if more than one DN resolves to any particular hash, these DNs are sorted in DN order. As such, logical ordering is consistent across the replicas, regardless of the actual physical order at which the data for the DNs are actually stored at any given site. The physical ordering may differ across the replicas for the data of the DNs that resolve to the same hash, since the physical ordering is also dependent by local collision identifiers that may differ across sites.

Techniques have been described herein that provide for the balanced distribution of data across the storage devices of a storage system that may be local and particular to a specific site, without having to maintain an additional, DN-to-database location, mapping database. This is because a hash algorithm is instead used to generate hashes from DNs that are then used to identify the locations within the databases at which to store BLOBs of data for the DNs. If multiple sites each maintain a replica of the database, the common usage of such a hash algorithm in this manner further avoids race conditions when identifying these locations - i.e., the hash of a given DN is the same regardless at which site the hash is generated. The usage of the same hash algorithm further provides a consistent database ordering across the replicas as well, ensuring that synchronization among the database replicas and database migration can be performed.

## Claims

1. A method (200) comprising:
computing, by a computing device, a hash from a key (206);
using the hash, identifying, by the computing device, a location within a database at a storage system local to the computing device (208); and
writing, by the computing device, data corresponding to the key to a data entity at the identified location within the database at the storage system (210).

2. The method of claim 1, further comprising:
receiving, by the computing device, a response from the database that no collision occurred in writing the data to the data entity at the location identified by the hash, the data corresponding to the key having successfully been written to the database (212).

3. The method of claim 1, further comprising:
receiving, by the computing device, a response from the database that a collision occurred in writing the data to the data entity data entity at the location identified by the hash (212);
responsively adjusting a collision identifier for the hash computed from the key, the collision identifier locally maintained by the computing device and not shared (218); and
writing, by the computing device, the data to the data entity at a new location within the database at the storage system, the new location identified by the hash and the adjusted collision identifier (210).

4. The method of claim 3, wherein the response indicates that the data with the key was unsuccessfully written to the database, other data corresponding to a different key having already been written at the location identified by the hash, the different key resolving to a hash that is identical to the hash to which the key resolves.

5. The method of claim 3, further comprising:
receiving, by the computing device, another response from the database that another collision occurred in writing the data to the data entity at the new location identified by the hash and the adjusted collision identifier (212);
responsively adjusting the collision identifier (218); and
writing, by the computing device, the data to the data entity at a second new location within the database at the storage system, the new location identified by the hash and the twice-adjusted collision identifier (210).

6. A non-transitory computer-readable data storage medium storing program code executable by a computing device to:
compute a hash from a key corresponding to data to be read from a data entity of a database at a storage system local to the computing device (306);
use the hash to identify a location within the database at the storage system (308); and
read the data entity from the identified location within the database at the storage system (310).

7. The non-transitory computer-readable data storage medium of claim 6, wherein the program code is executed by the computing device to further:
inspect the data within the data entity retrieved from the location identified by the hash to determine whether the data corresponds to the key (312); and
responsively determine that the data corresponding to the key, indicating that the data corresponding to the key was previously successfully written to the database at the location identified by the hash (314, 316).

8. The non-transitory computer-readable data storage medium of claim 6, wherein the program code is executed by the computing device to further:
inspect the data within the data entity retrieved from the location identified by the hash to determine whether the data corresponds to the key (312);
responsively determine that the data does not correspond to the key, indicating that the data corresponding to the key was not previously successfully written to the database at the location identified by the hash (314);
responsively adjust a collision identifier for the hash computed from the key, the collision identifier local to the computing device and not shared (316); and
read the data entity from a new location within the database at the storage system, the new location identified by the hash and the adjusted collision identifier (310).

9. A system (400) comprising:
a computing device (405); and
a storage system local to the computing device and storing a database of data entities at locations within the database (100),
wherein the computing device to compute hashes from keys having corresponding data stored in the data entities of the database, the hashes identifying the locations within the database at which the data entities storing the data corresponding to the keys are stored within the database.

10. The system of claim 9, wherein more than one key resolve to a same hash, the storage system storing the data corresponding to the more than one key in the data entities at the locations within the database identified by the hashes and a collision identifier for the same hash local to the storage system and not shared.

11. The system of claim 9, wherein the computing device is one computing device of a plurality of computing devices, and the storage system is one storage system of a plurality of storage systems,
wherein each storage system is local to a corresponding computing device and stores a database of the data entities at the locations identified by the hashes computed from the keys, each computing device locally computing the hashes from the keys corresponding to the data stored in the data entities,
wherein the hashes computed by each computing device for the keys are not shared with the other computing devices but are identical to the hashes that the other computing devices compute from the keys,
and wherein the databases at the storage systems are replicas of a same database.
